(19) Europäisches Patentamt
European Patent Office
Office européen des brevets

(11) Veröffentlichungsnummer: **0 149 092**
**B1**

(12) **EUROPÄISCHE PATENTSCHRIFT**

(45) Veröffentlichungstag der Patentschrift: **26.11.86**

(51) Int. Cl.⁴: **C 08 G 61/02**

(21) Anmeldenummer: **84114658.2**

(22) Anmeldetag: **03.12.84**

(54) **Verfahren zur Herstellung von Polycumylen.**

(30) Priorität: **15.12.83 DE 3345446**

(43) Veröffentlichungstag der Anmeldung: **24.07.85 Patentblatt 85/30**

(45) Bekanntmachung des Hinweises auf die Patenterteilung: **26.11.86 Patentblatt 86/48**

(84) Benannte Vertragsstaaten: **DE FR GB IT**

(56) Entgegenhaltungen:
**GB-A-1 179 099**
**US-A-3 418 259**
**US-A-3 770 661**

**CHEMICAL ABSTRACTS, Band 78, Nr. 10, 12. März 1973, Columbus, Ohio, USA; A. FRITZ "Polymers via Friedel-Crafts alkylation", Seite 6, Zusammenfassung Nr. 58878u;**

(73) Patentinhaber: **BAYER AG, Konzernverwaltung RP Patentabteilung, D-5090 Leverkusen 1 Bayerwerk (DE)**

(72) Erfinder: **Becker, Robert, Dr., Martin- Heidegger- Strasse 8, D-5090 Leverkusen 3 (DE)**
Erfinder: **Bottenbruch, Ludwig, Dr., Wöhlerstrasse 5, D-4150 Krefeld (DE)**
Erfinder: **Grolig, Johann, Dr., Heinrich- Lübke- Strasse 22, D-5090 Leverkusen (DE)**
Erfinder: **Waldmann, Helmut, Dr., Henry- T. von Böttinger- Strasse 15, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 149 092 B1

LIBER, STOCKHOLM 1986

**Beschreibung**

Die Erfindung betrifft ein Verfahren zur Herstellung von Polycumylen aus Cumylhalogenid durch Friedel-Crafts-Alkylierung.

Polycumylene des Typs $(-C_6H_4-C(CH_3)_2-)_n$ sind bekannt. Zu ihrer Herstellung nach Friedel-Crafts geht man entweder von Benzol und dem teueren p-Bis-(2-chlorisopropyl)-ben-zol (US-PS 37 70 661) oder von Cumylhalogenid aus, wobei das letztgenannte Verfahren nur zu Polykondensationsgraden n von 10 bis 30 führt (vgl. CHEMTECH (1972) 687).

Überraschenderweise wurde nun gefunden, daß man, ausgehend von Cumylhalogenid, Polycumylen mit Polykondensationsgraden von mehr als 30 - und zwar bei vernünftigen Raumzeitausbeuten - erhalten kann, wenn man für die Friedel-Crafts-Alkylierung eine Katalysatormischung, die Katalysatorkonzentration und das Verdünnungsverhältnis innerhalb enger Grenzen auswählt.

Gegenstand der Erfindung ist ein Verfahren zur Herstellung von Polycumylen aus α-Cumylhalogenid nach Friedel-Crafts, dadurch gekennzeichnet, daß man Cumylhalogenid und, bezogen auf 100 Gewichtsteile Cumylhalogenid,

1 bis 50, vorzugsweise 2 bis 20, Gewichtsteile Katalysatormischung aus

a) Aluminiumhalogenid und

b) als Zweiter Lewis-Säure einem Halogenid aus der Reihe

(i) Halogenide 1- bis 3-wertiger Übergangsmetalle mit Ausnahme solcher der 3., 4. und 5. Nebengruppe,

(ii) Halogenide von Tl(III), Sn(II), Pb(II), Sb(III) und Bi(III),

(iii) Bortrihalogenide und

(iv) P(V)-halogenide,

wobei das Molverhältnis a/b 1:10 bis 4:1, vorzugsweise 1:5 bis 3:1, beträgt,

in 100 bis 5000, vorzugsweise 300 bis 3000, Gewichtsteilen inertem organischem Lösungsmittel

bei Temperaturen von -130 bis +30°C, vorzugsweise von -50 bis +10°C, reagieren läßt.

Aluminiumhalogenide a) sind solche Aluminiumverbindungen, die mindestens eine Aluminium-Halogen-Bindung pro Molekül enthalten. Bevorzugte Aluminiumhalogenide umfassen Aluminiumtrichlorid, -tribromid und -trijodid, Aluminium-$C_1$-$C_4$-alkylhalogenide des Typs $(RAlHal_2)_n$ und $(R_2AlHal)_n$ mit Hal = Chlor, Brom, Jod und n = 1 oder 2, Komplexsalze des Typs $(AlHal_4)_2Me$ mit Me = zweiwertiges Metallion, wie z.B. $Co^{2+}$, und Aluminiumhalogenide, die aus Aluminiumtrihalogeniden in situ durch Austausch von ein oder zwei Halogenatomen durch andere Nucleophile, wie z.B. $C_1$-$C_3$-Al-koholate oder Säureanionen, wie z.B. Hydrogenphosphat, erhalten werden. Sind mehrere Halogenatome an ein Aluminiumatom gebunden, so können sie auch gemischt sein; beispielsweise kann ein Teil der Chloratome durch Brom- oder Jodatome ersetzt sein. Die Aluminiumhalogenide a) können auch Hydratwasser enthalten, doch scheiden Hydrate mit vollständig hydratisierten Aluminiumionen (Koordinationszahl mindestens 6) aus. Man kann anstelle der Aluminiumhalogenide a) auch solche Verbindungen einsetzen, aus denen sich die Aluminiumhalogenide vor oder während der Reaktion bilden.

Für die Halogenide b) gilt, daß sie - ebenso wie die Halogenide a) - unterschiedliche Halogene und/oder Hydratwasser enthalten können, daß ihre Halogenatome teilweise durch andere Nucleophile ersetzt sein können und daß sie vor oder während der Reaktion aus anderen Verbindungen gebildet werden können.

Bevorzugte Halogenide b) sind z.B.:

(i) Kupfer(II)-, Zink-, Chrom(III)-, Eisen(II)-, Eisen(III)-, Cobalt- und Nickelhalogenide, insbesondere Eisen(III)chlorid,

(ii) Thallium(III)chlorid, Zinn(II)chlorid, Blei(II)chlorid, Antimontrichlorid und Wismuttrichlorid,

(iii) Bortrichlorid,

(iv) Phosphorpentachlorid und Phosphoroxytrichlorid.

Als inerte Lösungsmittel eignen sich alle Lösungsmittel, deren Schmelzpunkte so niedrig liegen, daß die gesamte Reaktionsmischung bei der jeweiligen Reaktionstemperatur flüssig ist. Bevorzugte inerte Lösungsmittel sind halogenierte, vorzugsweise chlorierte, Kohlenwasserstoffe, wie z.B. Mono-, Di-, Tri- und Tetrachlormethan, Mono-, 1.1-und 1.2-Di-, Tri- und 1.1.2.2-Tetrachlorethan, Mono-, 1.1- und 1.2-Di-, Tri- und Tetrachlorethylen. Beispiele bevorzugter Fluor, Brom bzw. Jod-enthaltender Lösungsmittel sind Monobrommonochlormethan, Bromchlorfluormethan, Monofluordichlormethan, Methyljodid, Bromethan, 1-Chlor-2-bromethylen, 1,1-Dibromethan, 1,1-Dichlor-1,2-dibrom-ethan, 1,2-Dichlor-1,2-dibromethan, 1,1-Dichlor-1,2,2,2-tetrafluorethan, Monojodethan, 1,1,2-Tribromethan, 1,1,2-Trichlor-1,2,2-trifluorethan, 1,2-Dibromethylen. Bevorzugt eingesetzt werden Dichlormethan und Gemische von Dichlormethan und Trichlorethylen.

Nach einer Variante des erfindungsgemäßen Verfahrens kann man schwache bis mittelstarke Lewis-Basen ($pK_b$-Werte von +4 bis +13), welche über Sauerstoffatome mit den Metallionen der Halogenide a) und/oder b) Komplexe bilden können, mitverwenden, um die Halogenide löslicher zu machen. Die Menge der Lewis-Basen wird so gewählt, daß mindestens eine Metall-Halogen-Bindung pro Molekül erhalten bleibt. Bevorzugte Beispiele solcher Lewis-Basen sind Borat-, Silikat-, Phosphat-, Sulfat- und Perchloratreste, aber auch Arsenate, Vanadate, Niobate, Tantalate und Titanate. Besonders bevorzugte Lewis-Basen sind die Säurereste der Orthophosphorsäure und die Reaktionsprodukte von Phosphorpentoxid mit den in den inerten Lösungsmitteln vorhandenen Spuren von Wasser, also unterschiedlichste Produkte, meist aber Polyphosphate. Phosphorpentoxid wird vorzugsweise in Mengen von 0.001 bis 1.0 Gew.-%, bezogen auf das gesamte Reaktionsgemisch, zugegeben, wodurch komplexbildende Phosphate entstehen, deren Konzentration aber nie

so groß ist, daß sämtliche Metall-Halogen-Bindungen gespalten werden.

Eine weitere Komponente, die gegebenenfalls zugesetzt wird, ist Halogenwasserstoff, vorzugsweise der zu dem Halogen des eingesetzten Cumylhalogenids gehörende Halogenwasserstoff. Der Halogenwasserstoff kann vor Reaktionsbeginn zugegeben werden; im Laufe des Verfahrens entsteht er sowieso als Spaltprodukt. Da eine zu hohe Konzentration die Bildung von höhermolekularen Polycumylenen behindert, wird man darauf achten, daß die Konzentration an Halogenwasserstoff 0.1 Mol, vorzugsweise 0,02 Mol, pro 100 g Reaktionsgemisch nicht überschreitet. Zu diesem Zweck kann man z.B. unter vermindertem Druck arbeiten oder einen Inertgasstrom durch das Reaktionsgemisch blasen.

Das erfindungsgemäße Verfahren kann bei Überdruck, Unterdruck oder - vorzugsweise - bei Normaldruck durchgeführt werden. Beispielsweise kann man unter Rühren und Stickstoffatmosphäre eine Suspension der anorganischen Halogenide und gegebenenfalls sonstiger Zusätze in einem Teil des inerten Lösungsmittels vorlegen und eine Lösung des Cumylhalogenids im Rest des inerten Lösungsmittels zutropfen, wobei man die gewünschte Temperatur durch externe Kühlung aufrechterhalten kann. Nach beendeter Zugabe des Cumylhalogenids kann man noch eine Zeitlang nachrühren und mittels Inertgas den gebildeten Halogenwasserstoff aus dem Reaktionsgemisch entfernen. Zur Zerstörung des Katalysatorsystems kann man das Reaktionsgemisch in Wasser oder auf Eis gießen und die erste unlösliche Polymerfraktion abfiltrieren. Aus der organischen Phase kann die zweite Fraktion durch Versetzen mit Aceton gefällt werden. Aus der Mutterlauge kann man durch Einengen und Behandeln mit Methanol schließlich die Fraktion mit dem geringsten Molekulargewicht isolieren.

Die erfindungsgemäß hergestellten Polycumylene können als Endgruppen die aufgrund der Friedel-Crafts-Alkylierung entstehenden Cumylgruppen (auf der einen Seite) sowie Chlorisopropylphenyl- bzw. durch Hydrolyse entstandene Hydroxyisopropylphenylgruppen (auf der anderen Seite) enthalten. Weitere mögliche Endgruppen sind Halogen und OR', wobei R' $C_1$-$C_{18}$-Alkyl (insbesondere Methyl), $C_7$-$C_{12}$-Aralkyl (vorzugsweise Benzyl) und $C_6$-$C_{18}$-Aryl, vorzugsweise $C_6$-$C_{10}$-Aryl (insbesondere Phenyl) bedeuten. Durch Nebenreaktionen können jedoch z.B. auch Isopropenylphenylgruppen oder Trimethylphenylindylgruppen der Formel

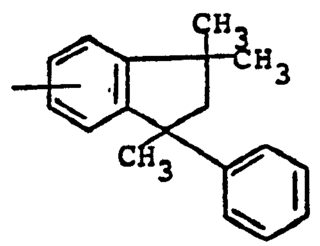

entstehen.

Die erfindungsgemäß hergestellten Polycumylene weisen vorzugsweise als Gewichtsmittel bestimmte Molekulargewichte $\bar{M}_w$ von über 5000 und Schmelzpunkte über 270°C auf. Sie können auch durch Mehrfachalkylierung am Phenylring verzweigt sein, und zwar können bis zu 30 % aller Phenylringe Verzweigungsstellen sein.

**Beispiel 1**

Zu einer Mischung von 300 ml getrocknetem Methylenchlorid, 1 g wasserfreiem Aluminiumtrichlorid und 1 g wasserfreiem Eisentrichlorid wurden bei einer Temperatur von -10°C unter Rühren und Begasen mit Stickstoff innerhalb von 60 min 78 g α -Cumylchlorid, gelöst in 200 ml Methylenchlorid, zugetropft und dann 3 Stunden lang bei -10°C nachgerührt.

Anschließend wurde das gesamte Reaktionsgut auf Raumtemperatur erwärmt und in 2 l destilliertes Wasser eingerührt. Dann wurde der Niederschlag abfiltriert (22,9 g) und der Filterkuchen mit 150 ml Methylenchlorid nachgewaschen. Man erhielt 16,1 g (22 % der Theorie, bezogen auf umgesetztes α -Cumylchlorid) eines in Methylenchlorid unlöslichen Rückstandes, dessen Schmelzbereich um 280°C lag. Nachdem mit siedendem Tetrahydrofuran eine Fraktion von ca. 2 g abgetrennt worden war, deren mittleres Molgewicht um 1400 betrug, verblieb ein kristallines Polykondensat, das ein Mw von 5 500 und Mn von 4 000 (gemessen durch Gelpermeationschromatographie in Trichlorbenzol bei 140°C) aufwies. Der Schmelzbereich des Produkts lag bei 248 - 284°C. Die organische Phase des Filtrates, vereinigt mit den 150 ml Methylenchlorid, die zum Waschen des Filterkuchens verwendet wurden, wurde in 2 Liter Methanol getropft. Es fielen 25 g eines kurzkettigen Cumylenoligomeren mit einem Schmelzbereich von 150°C.

**Beispiel 2**

183 g α -Methylstyrol wurden in 600 ml Methylenchlorid gelöst und bei -10°C bis -12°C mit getrocknetem Chlorwasserstoff in α -Cumylchlorid überführt.

Diese Lösung wurde innerhalb einer Stunde in eine Mischung von 3 g wasserfreiem Aluminiumtrichlorid, 12 g wasserfreiem Eisentrichlorid, 0,5 g Phosphorpentoxid und weiteren 1800 ml Methylenchlorid bei -40°C portionsweise eingebracht und dann weitere 4 Stunden lang bei -40°C gerührt.

Zum Abbruch der Reaktion wurde die Reaktionsmischung in 6 l Wasser von Raumtemperatur gegeben.

Die organische Phase wurde abgetrennt, auf ein Viertel des Volumens eingeengt und mit der doppelten Gewichtsmenge Aceton verrührt. Ein farbloser Feststoff (Polycumylen $P_1$) wurde abfiltriert (Schmelzbereich 210-230°C; $M_w$ 2350; $M_n$ 1590; Ausbeute 38 %). - Ferner wurde durch Fällen in überschüssigem Methanol aus der eingeengten und mit Methylenchlorid versetzten Mutterlauge mit 47 % Ausbeute ein Polycumylen $P_2$ mit einem Schmelzbereich von 78-110°C und $M_w$ von 1350 bzw. $M_n$ von 1000 erhalten.

Löst man $P_1$ in ca. 500 ml siedendem Chlorbenzol undkühlt dann auf Raumtemperatur ab, erhält man mit 26 % Ausbeute (bezogen auf $P_1$) ein Polycumylen vom Schmelzbereich 245-255°C ($M_w$ 2010; $M_n$ 1510). In der flüssigen Phase verbleibt ein Polycumylen ($P_3$) gelöst, welches in überschüssigem Methanol gefällt bei einem Schmelzbereich von 190 - 215°C ein $M_w$ von 2650 und ein $M_n$ von 1610 aufweist (Ausbeute 53 %, bezogen auf eingesetztes Polycumylen $P_1$). Durch präparative Gelchromatographie in Chlorbenzol bei Raumtemperatur ließen sich aus $P_3$ zu etwa gleichen Teilen ein Polycumylen mit $M_w$ = 4200 und $M_n$= 2650 (Schmelzbereich 180 - 195°C) ein Polycumylen von $M_w$ = 2400 und $M_n$ = 1700 (Schmelzbereich 170 - 180°C) gewinnen.

**Beispiel 3**

Entsprechend Beispiel 2 wurden bei -10°C 3 g Aluminiumtrichlorid, 6 g Eisentrichlorid und 30 g Phosphorpentoxid eingesetzt. Man erhielt neben 105,8 g niedermolekularer Oligocumylene 67,4 g eines Polycumylens ($P_1$) mit einem Schmelzbereich um 270°C ($M_w$= 2940, $M_n$ = 1780). Nach Behandeln mit Chlorbenzol bei 40°C und Abfiltrieren des Unlöslichen, erhält man durch Fällen mit Methanol mit einer Ausbeute von 40 % (bez. auf $P_1$) ein Polycumylen mit $M_w$ = 2100, $M_n$ = 1700 (Schmelzbereich um 240°C); Behandeln des Rückstands mit Chlorbenzol bei 65°C und Abfiltrieren vom Unlöslichen führt nach Fällung mit Methanol mit einer Ausbeute von 25 % (bez. auf $P_1$) zu einem Polycumylen mit $M_w$ = 2600, $M_n$ = 2100 (Schmelzbereich um 270°C). Der zuletzt erhaltene Rückstand (Ausbeute 23 %, bez. auf $P_1$) hat folgende Werte:

$M_w$ = 4500, $M_n$ = 3400 Schmelzbereich: um 300°C - 315°C.

**Beispiel 4**

183 g α -Methylstyrol wurden in 600 ml Methylenchlorid gelöst und dann bei -10°C bis -12°C mit getrocknetem Chlorwasserstoff in Cumylchlorid überführt.

Diese Lösung wurde innerhalb einer Stunde in eine Mischung von 6 g wasserfreiem Aluminiumtrichlorid und 3 g wasserfreiem Eisentrichlorid in weiteren 1800 ml Methylenchlorid portionsweise eingebracht und bei -10°C 4 Stunden gerührt. Sodann wurde die gesamte Reaktionsmischung bei Raumtemperatur mit 6 l Wasser versetzt. Aus der organischen Phase wurde das Lösungsmittel abdestilliert, der Rückstand mit 1,2 l Aceton nachgewaschen, dann abfiltriert und bei 50°C getrocknet; man erhielt 72,5 g eines farblosen Feststoffs (R1) mit einem Schmelzbereich von 268 - 276°C. Durch fraktioniertes Fällen nach Behandeln mit Chlorbenzol bei 40°C - 100°C wurden erhalten:

**Beispiel 5**

183 g α -Methylstyrol wurden in 600 ml Methylenchlorid gelöst und bei -10°C bis -12°C mit getrocknetem Chlorwasserstoff in α -Cumylchlorid überführt.

Diese Lösung wurde innerhalb einer Stunde in eine Mischung von 3 g wasserfreiem Aluminiumtrichlorid, 12 g wasserfreiem Eisentrichlorid, 0,5 g Phosphorpentoxid und weiteren 1800 ml Methylenchlorid bei -10°C portionsweise eingebracht und dann weitere 4 Stunden lang bei -10°C gerührt.

Zum Abbruch der Reaktion wurde die Reaktionsmischung in 6 l Wasser von Raumtemperatur gegeben.

Die organische Phase wurde abgetrennt, auf ein Viertel des Volumens eingeengt und mit der doppelten Gewichtsmenge Aceton verrührt. Ein farbloser Feststoff (Polycumylen $P_1$) wurde abfiltriert (Schmelzbereich 300-320°C; $M_w$ 9700; $M_n$ 2000; Ausbeute 46 %). Ferner wurde durch Fällen in überschüssigem Methanol aus der eingeengten und mit Methylenchlorid versetzten Mutterlauge mit 47 % Ausbeute ein Polycumylen $P_2$ mit einem Schmelzbereich von 110-190°C und $M_w$ von 3000 bzw. $M_n$ 2000 erhalten.

Kristallisiert man $P_1$ aus ca. 500 ml Chlorbenzol um, erhält man mit 15 % Ausbeute, bezogen auf $P_1$, ein

Polycumylen vom Schmelzbereich 320-330°C ($M_w$ 32 000; $M_n$ 15 000). In der flüssigen Phase verbleibt ein Polycumylen ($P_3$) gelöst; welches in überschüssigem Methanol gefällt bei einem Schmelzbereich um 250°C ein $M_w$ von 3650 und ein $M_n$ von 2600 aufweist (Ausbeute 53 %, bezogen auf eingesetztes Polycumylen $P_1$).

**Patentansprüche**

1. Verfahren zur Herstellung von Polycumylen aus α -Cumylhalogenid nach Friedel-Crafts, dadurch gekennzeichnet, daß man Cumylhalogenid und, bezogen auf 100 Gewichtsteile Cumylhalogenid,
1 bis 50 Gewichtsteile Katalysatormischung aus
a) Aluminiumhalogenid und
b) als zweiter Lewis-Säure einem Halogenid aus der Reihe
(i) Halogenide 1- bis 3-wertiger Übergangsmetalle mit Ausnahme solcher der 3., 4. und 5. Nebengruppe,
(ii) Halogenide von Tl(III), Sn(II), Pb(II), Sb(III) und Bi(III),
(iii) Bortrihalogenide und
(iv) P(V)-halogenide,
wobei das Molverhältnis a/b 1:10 bis 4:1 beträgt, in 100 bis 5000 Gewichtsteilen inertem organischem Lösungsmittel bei Temperaturen von -130 bis +30°C reagieren läßt.

2. Verfahren nach Anspruch 1, dadurch gekennzeichnet, daß man, bezogen auf 100 Gewichtsteile Cumylhalogenid, 2 bis 20 Gewichtsteile Katalysatormischung aus a) und b) verwendet.

3. Verfahren nach Ansprüchen 1 und 2, dadurch gekennzeichnet, daß man ein Molverhältnis a/b von 1:5 bis 3:1 wählt.

4. Verfahren nach Ansprüchen 1 - 3, dadurch gekennzeichnet, daß man, bezogen auf 100 Gewichtsteile Cumylhalogenid, 300 bis 3000 Gewichtsteile inertes organisches Lösungsmittel einsetzt.

5. Verfahren nach Ansprüchen 1 - 4, dadurch gekennzeichnet, daß man die Komponenten bei Temperaturen von -50 bis +10°C reagieren läßt.

**Claims**

1. Process for the preparation of polycumylene from α -cumyl halide using the Friedel-Crafts method, characterised in that cumyl halide and, based on 100 parts by weight of cumyl halide, 1 to 50 parts by weight of a catalyst mixture of
a) aluminium halide and
b) as the second Lewis acid, a halide from the series comprising
(i) halides of 1- to 3-valent transition metals except those of subgroups 3, 4 and 5,
(ii) halides of Tl(III), Sn(II), Pb(II), Sb(III) and Bi(III),
(iii) boron trihalides and
(iv) P(V) halides,
the molar ratio a/b being 1:10 to 4:1, are reacted at temperatures of -130 to +30°C in 100 to 5000 parts by weight of an inert organic solvent.

2. Process according to Claim 1, characterised in that, based on 100 parts by weight of cumyl halide, 2 to 20 parts by weight of the catalyst mixture of a) and b) are used.

3. Process according to Claims 1 and 2, characterised in that a molar ratio a/b of 1:5 to 3:1 is used.

4. Process according to Claims 1 - 3, characterised in that, based on 100 parts by weight of cumyl halide, 300 to 3000 parts by weight of an inert organic solvent are used.

5. Process according to Claims 1 - 4, characterised in that the components are allowed to react at temperatures of -50 to +10°C.

**Revendications**

1. Procédé de production de polycumylidène à partir d'un halogénure d'α-cumyle d'après la réaction de Friedel-Crafts, caractérisé en ce qu'on fait réagir à des températures de -130 à +30°C dans 100 à 5000 parties en poids de solvant organique inerte un halogénure de cumyle et, pour 100 parties en poids d'halogénure de cumyle,
1 à 50 parties en poids d'un mélange catalyseur formé
a) d'un halogénure d'aluminium et
b) en tant que second acide de Lewis, d'un halogénure choisi dans la série comprenant
(i) des halogénures de métaux de transition monovalents à trivalents à l'exception de ceux des 3ème, 4ème et 5ème sous-groupes,
(ii) des halogénures de Tl(III), Sn(II), Pb(II), Sb(III) et Bi(III),

(iii) des trihalogénures de bore et
(iv) des halogénures de P(V),
le rapport molaire a/b ayant une valeur de 1:10 à 4:1.

2. Procédé suivant la revendication 1, caractérisé en ce qu'on utilise 2 à 20 parties en poids de mélange catalyseur de a) et b) pour 100 parties en poids d'halogénure de cumyle.

3. Procédé suivant les revendications 1 et 2, caractérisé en ce qu'on choisit un rapport molaire a/b de 1:5 à 3:1.

4. Procédé suivant les revendications 1 à 3, caractérisé en ce qu'on utilise 300 à 3000 parties en poids de solvant organique inerte pour 100 parties en poids d'halogénure de cumyle.

5. Procédé suivant les revendications 1 à 4, caractérisé en ce qu'on fait réagir les composants à des températures de -50 à +10°C.